# EUROPÄISCHE PATENTSCHRIFT

(11) **EP 3 024 628 B1**
(45) Veröffentlichungstag und Bekanntmachung des Hinweises auf die Patenterteilung: **19.04.2017**
(21) Anmeldenummer: 14741339.7
(22) Anmeldetag: 21.07.2014
(51) Int. Cl.: B29C 45/56, B29C 45/66

(54) **SPRITZGIESSMASCHINE MIT EINER SCHLIESSEINHEIT**
INJECTION MOULDING MACHINE WITH A CLAMPING UNIT
MACHINE DE MOULAGE PAR INJECTION AVEC UNE UNITÉ DE FERMETURE

(30) Priorität: 22.07.2013 DE 102013214244
(43) Veröffentlichungstag der Anmeldung: 01.06.2016
(73) Patentinhaber: Sumitomo (SHI) Demag Plastics Machinery GmbH, 90571 Schwaig (DE)
(72) Erfinder: KOBEL, Peter, 01237 Dresden (DE); HANKE, Uwe, 01454 Radeberg (DE); NEUMANN, Rudolf, 01445 Radebeul (DE)
(74) Vertreter: Rau, Schneck & Hübner Patentanwälte Rechtsanwälte PartGmbB
(86) Internationale Anmeldenummer: PCT/EP2014/065644
(87) Internationale Veröffentlichungsnummer: WO 2015/011102

(56) Entgegenhaltungen:
- JP-Y- S5 017 962

## Beschreibung

Der Inhalt der deutschen Patentanmeldung 10 2013 214 244.7 wird durch Bezugnahme hierin aufgenommen.

Die Erfindung betrifft eine Spritzgießmaschine mit den im Oberbegriff des Patentanspruches 1 angegebenen Merkmalen.

Diese Merkmale geben die grundsätzlichen Komponenten von Spritzgießmaschinen in Bezug auf deren bewegliche und feste Form-Aufspannplatten, eine feste Abstützplatte und eine Schließeinheit zum Zustellen der beweglichen Form-Aufspannplatte wieder, wie sie seit langem aus verschiedensten Druckschriften zum Stand der Technik bekannt sind. Beispielhaft sind die DE 25 36 880 A1, DE 43 28 844 C2, DE 199 57 485 A1, DE 103 42 012 A1, EP 0 511 170 B1 oder EP 0 775 567 A1 zu nennen. Die Schließeinheiten dieser Spritzgießmaschinen haben gemeinsam, dass ein parallel zur Zustellrichtung der beweglichen Aufspannplatte in Richtung der festen Aufspannplatte angetriebenes Antriebselement beispielsweise in Form eines Kreuzkopfes auf einem Spindeltrieb zur Einleitung einer Betätigungskraft in die Schließeinheit vorhanden ist. Die gelenkig mit diesem Antriebselement verbundene Lenkeranordnung zwischen der Abstützplatte und der beweglichen Aufspannplatte zur Übertragung der Bewegung des Antriebselementes auf die bewegliche Aufspannplatte im Sinne einer Zustellung der beweglichen Aufspannplatte relativ zur festen Aufspannplatte ist bei diesen vorbekannten Schließeinheiten durch eine typische Kniehebelanordnung mit zwei Lenkern zwischen Abstützplatte und beweglicher Aufspannplatte gebildet, die durch einen dritten Lenker zum Antriebselement komplettiert ist.

Derartige bekannte Schließeinheiten einer Spritzgießmaschine erfüllen damit die Hauptaufgabe des Öffnen und Schließens des Werkzeuges sowie dessen Zuhalten während des Einspritzens von Kunststoff in die Kavität des Werkzeuges. Durch die Kraftübersetzung der Schließeinheit ist es möglich, mit einer vergleichsweise geringen Antriebskraft eine hohe Schließkraft zu erzeugen, was durch den Einsatz einer Kniehebelkonstruktion - beispielsweise auch als Doppelkniehebel in Form von Vier- und Fünf-Punkt-Kniehebeln, wie dies in der US 5,971,743 offenbart ist - realisiert ist. Sowohl die hohe Kraftübersetzung für den Schließkraftaufbau als auch das Zuhalten des Werkzeuges wird durch Ausnutzung einer Umkehrlage der Kniehebelanordnung gewährleistet.

Dieses grundsätzliche Kniehebelkonzept wird auch bei etwas abweichenden Konstruktionen ausgenutzt, wie beispielsweise dem aus der DE 10 2004 026 450 B4 bekannten Doppelkurbelantrieb für eine Schließeinheit.

Diese bekannten Kniehebellösungen nutzen die Umkehrlage der beweglichen Aufspannplatte zur Erzeugung der hohen Schließkräfte. Problematisch dabei ist, dass die Umkehrlage nicht voll ausgenutzt werden kann. In der Regel erfolgt die Maschineneinrichtung nämlich so, dass der Arbeitspunkt kurz vor oder nach der Umkehrlage liegt, was wiederum den Bereich einschränkt, der zum Aufbau der Zuhaltekräfte notwendig ist. Die theoretisch mögliche Kraftübersetzung kann somit nicht erreicht werden.

Ein weiterer Nachteil dieser vorbekannten Kniehebellösungen liegt darin, dass aus der Umkehrlage naturgemäß die bewegliche Aufspannplatte nur in einer Richtung, nämlich in Öffnungsrichtung, herausbewegt werden kann. Dies schränkt die Eignung einer solchen Schließeinheit zur Durchführung einer sogenannten Prägefunktion ein, bei der nach Einnahme der Schließposition des Werkzeuges noch eine weitere Zustellbewegung in Schließrichtung zum Durchführen eines Prägeschrittes auf das in die Kavität eingespritzte Kunststoffmaterial vonstatten geht.

Aus der JP S50 17962 Y1 ist eine Schließeinheit für eine Spritzgießmaschine bekannt, deren Lenkeranordnung drei gelenkig gekoppelte Lenker umfasst, nämlich einen an der Abstützplatte angelenkten Hilfslenker, einen daran angelenkten Zentrallenker, der mit dem Antriebselement gekoppelt ist, und einen Abtriebslenker zwischen dem Zentrallenker und der bewegliche Aufspannplatte. In einer Zuhalteposition der beweglichen Aufspannplatte liegen die vier Gelenkachsen dieser Lenkeranordnung auf einer Geraden. Nähere Angaben über die Bewegungsbahn der einzelnen Lenker und einem möglichen Prägehub der beweglichen Formaufspannplatte sind aus dieser Druckschrift nicht entnehmbar.

Ausgehend von den geschilderten Problemen des Standes der Technik liegt der Erfindung die Aufgabe zugrunde, eine Spritzgießmaschine mit einer verbesserten Schließeinheit bereitzustellen, mit deren Hilfe eine hohe Kraftübersetzung zur Erzeugung hoher Schließkräfte bei einer fortlaufenden Abtriebsbewegung ermöglicht wird. Unter einer solchen fortlaufenden Abtriebsbewegung ist zu verstehen, dass die bewegliche Aufspannplatte aus dem Bereich der hohen Kraftübersetzung, also praktisch in der Zuhalteposition, in zwei Richtungen herausbewegt werden und damit insbesondere einen Prägehub aus dieser Position heraus ausführen kann. Die Zuhalteposition soll also nicht mehr mit einer Umkehrlage einer üblichen Kniehebelanordnung verbunden sein.

Die vorstehende Aufgabe wird durch die im Kennzeichnungsteil des Anspruches 1 angegebenen Merkmale gelöst, wonach die Lenker derart miteinander gekoppelt sind, dass die Gelenkachse zwischen Zentral- und Abtriebslenker auf einer nicht-kreisförmigen Bewegungsbahn läuft. Die Gerade, auf der in der Zuhalteposition der beweglichen Aufspannplatte die vier Gelenkachsen dieser Lenkeranordnung liegen, steht dabei senkrecht auf einer Wendepunkt-Tangente an der Bewegungsbahn der Gelenkachse zwischen Zentral- und Abtriebslenker.

Die Bewegungsbahn der Gelenkachse zwischen Zentral- und Abtriebslenker weist also mit anderen Worten einen Wendepunkt auf, in dem die Gelenkachse bei geradliniger Anordnung der Gelenkachsen genau dann liegt, wenn die Zuhalteposition der Schließeinheit eingenommen wird. Aufgrund des Wendepunktes kann also die Gelenkachse zwischen Zentral- und Abtriebslenker angetrieben durch das Antriebselement sowohl weiter in Zustellrichtung beispielsweise zur Durchführung eines Prägeschrittes oder entgegen der Zustellrichtung zum Öffnen des Werkzeuges bewegt werden.

Gleichwohl wird durch Ausrichtung der vier Gelenkachsen auf einer Geraden die übliche Selbsthemmung der Getriebeanordnung analog der Totpunktlage eines Kniehebels erzielt. Die Schließeinheit befindet sich also in einer Stellung höchster Kraftübersetzung, wonach anschließend noch ein Prägehub aus dieser Stellung heraus auf die feste Aufspannplatte realisiert werden kann.

Zusammenfassend wird also durch eine gezielte Gestaltung der Bewegungsbahn der Gelenkachse zwischen Zentral- und Abtriebslenker ein optimaler Kompromiss zwischen einer hohen Kraftübersetzung in der selbstgesperrten Zuhalteposition und der Möglichkeit erreicht, aus dieser Position heraus einen Prägehub weiter in Zustellrichtung durchzuführen.

Eine bevorzugte Gestaltung der Bewegungsbahn sieht in Zustellrichtung einen im Wesentlichen linearen, schräg zur Zustellung verlaufenden Zustell-Ast, einen sich daran anschließenden Wendepunkt-Ast mit dem Wendepunkt der Bewegungsbahn und einen sich wiederum daran anschließenden, weiter in Zustellrichtung verlaufenden Prägeast vor.

Zustell-Ast und Präge-Ast der Bewegungsbahn können vorteilhafterweise so ausgerichtet sein, dass beim Durchlauf des Zustell-Astes ein gegenüber dem Präge-Ast vorzugsweise deutlich höhere Übersetzung zwischen der Bewegung des Antriebselementes und der beweglichen Aufspannplatte stattfindet. Damit kann während des Zustellens eine schnelle Bewegung der beweglichen Aufspannplatte, während des Prägens eine hohe Prägekraft erzielt werden.

Gemäß einer weiteren bevorzugten Ausführungsform der Erfindung ist in der Zuhalteposition der Hilfslenker in eine von der beweglichen Aufspannplatte derart weg weisenden Richtung ausgerichtet, dass sich Hilfslenker und Zentrallenker in dieser Zuhalteposition zumindest teilweise überlagern. Damit wird eine kompakte Bauform des Schließmechanismus erzielt.

Diesem Zweck dient auch die weitere bevorzugte Ausgestaltung der Erfindung, wonach die Länge des Hilfslenkers maximal der Hälfte der Länge von Zentral- oder Abtriebslenker entspricht. Diese Formgebung wird im Übrigen auch durch die zu erzielende Bewegungsbahn der Gelenkachse zwischen Zentral- und Abtriebslenker beeinflusst.

Es kann sich vorteilhafterweise die Gelenkachse zwischen Abtriebslenker und beweglicher Aufspannplatte in der Zuhalteposition im Krümmungsmittelpunkt der Bewegungsbahn der Gelenkachse zwischen Zentral- und Abtriebslenker befinden. Damit wird die Güte der Kraftübersetzung, wie sie durch die erfindungsgemäße Schließeinheit erzielt werden kann, deutlich erhöht. Es verlängert sich dadurch der Bereich hoher Kraftübersetzung vor und nach dem Arbeitspunkt der Schließeinheit in der Zuhalteposition.

Wie an sich aus dem Stand der Technik bekannt ist, können zwei oder mehr einander entsprechende Lenkeranordnungen spiegelsymmetrisch zur Antriebsachsenebene des Antriebselementes vorgesehen und mit diesem gekoppelt sein. Die Zustellrichtung der beweglichen Aufspannplatte und damit die Ausrichtung der Schließeinheit können horizontal oder vertikal ausgerichtet sein. Die Erfindung ist also gleichermaßen für eine horizontale wie vertikale Ausführung einer Spritzgießmaschine geeignet.

Bevorzugte Alternativen für die Betätigung des Antriebselementes sind durch einen pneumatischen oder hydraulischen Kolben-Zylinder-Antrieb, einen Spindeltrieb, einen Zahnstangenantrieb oder einen Linearmotor gegeben.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1 bis 3: schematische Teil-Seitenansichten einer Spritzgießmaschine in unterschiedlichen Arbeitspositionen der beweglichen Form-Aufspannplatte und der Schließeinheit,
- Fig. 4: eine horizontal zweigeteilte, aus den Fig. 2 und 3 kombinierte Ansicht der Spritzgießmaschine in Zuhalteposition (unten) und Prägestellung (oben) der beweglichen Aufspannplatte,
- Fig. 5: eine teilweise geschnittene Teil-Seitenansicht einer konstruktiv ausgeführten Spritzgießmaschine in vollständig geöffneter Position von beweglicher Aufspannplatte und Schließeinheit analog Fig. 1,
- Fig. 6: eine Teil-Draufsicht auf die Spritzgießmaschine gemäß Fig. 5,
- Fig. 7: eine Ansicht analog Fig. 5 in der Zuhalteposition von beweglicher Aufspannplatte und Schließeinheit entsprechend Fig. 2,
- Fig. 8: eine Ansicht analog Fig. 5 in weiter zugestellter Prägestellung der beweglichen Aufspannplatte entsprechend Fig. 3,
- Fig. 9: eine horizontal zweigeteilte, aus den Fig. 7 und 8 kombinierte Ansicht der Schließeinheit in Zuhalteposition (oben) bzw. Prägestellung (unten) entsprechend Fig. 4, und
- Fig. 10: eine Teil-Draufsicht in analog Fig. 9 zweigeteilter Darstellung der Schließeinheit in Zuhalteposition (oben) bzw. Präge-Stellung (unten).

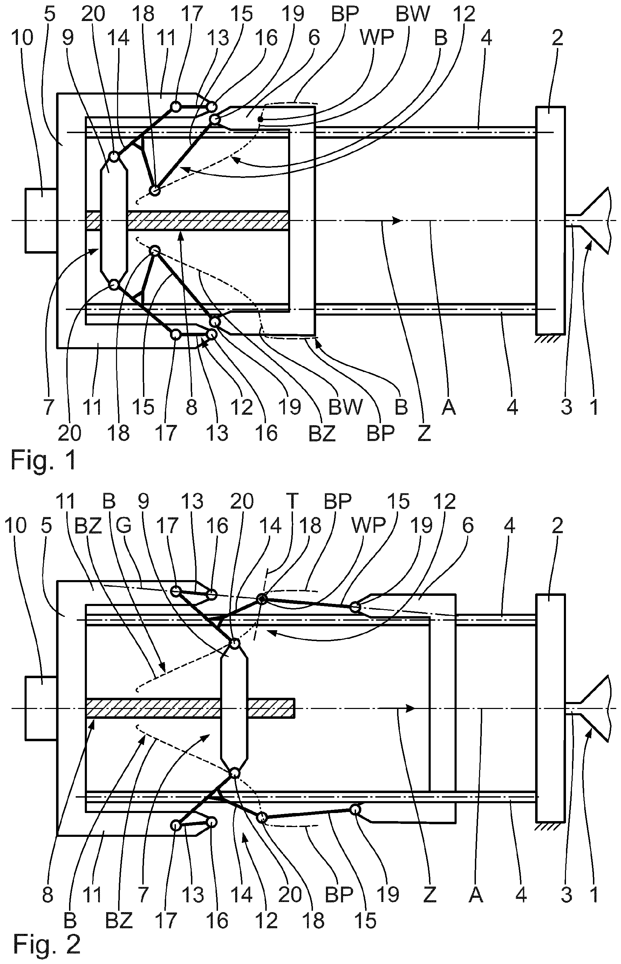

Anhand der Fig. 1 bis 4 soll die grundsätzliche Konstruktion der in diesen Darstellungen ausschnittsweise und nur höchst schematisch gezeigten Spritzgießmaschine erläutert werden. Lediglich knapp angerissen ist die übliche Einspritzeinheit 1 der Spritzgießmaschine, die außen an der festen Form-Aufspannplatte 2 über einen üblicherweise Düsenansatz 3 angebunden ist. Über vier parallele, im Viereck angeordnete Holme 4 ist eine feste Abstützplatte 5 an die feste Aufspannplatte 2 angebunden. Auf diesen Holmen 4 ist schließlich eine bewegliche Form-Aufspannplatte 6 in Zustellrichtung Z verschiebbar geführt, so dass ein in den Fig. 1 bis 4 nicht näher dargestelltes Formwerkzeug mit einer entsprechenden Kavität zwischen zwei Formhälften geöffnet und geschlossen und gegebenenfalls einem Prägeschritt unterworfen werden kann.

Zum Antrieb der beweglichen Aufspannplatte 6 dient die als Ganzes mit 7 bezeichnete Schließeinheit, die einen Spindeltrieb 8 für einen darauf geführten Kreuzkopf 9 als Antriebselement zur Einleitung einer Betätigungskraft in die Schließeinheit 7 aufweist. Der Spindeltrieb 8 wird durch einen Elektromotor 10 an der festen Abstützplatte 5 angetrieben.

Zur Übertragung der Vorschubbewegung des Kreuzkopfes 9 auf die bewegliche Aufspannplatte 6 in und entgegen der Zustellrichtung Z ist zwischen dieser Aufspannplatte 6, dem Kreuzkopf 9 und den in Zustellrichtung Z von der festen Abstützplatte 5 abstehenden Lagerstreben 11 eine zweifach oben und unten vorhandene Lenkeranordnung 12 vorgesehen. Im Folgenden wird nur die bezogen auf die Fig. 1 bis 4 oben liegende Lenkeranordnung 12 näher erläutert. Die unten liegende Lenkeranordnung 12 ist gegenüber der horizontalen Antriebsachsenebene A spiegelsymmetrisch aufgebaut.

Die Lenkeranordnung 12 ist aus drei aneinandergereihten und gelenkig gekoppelten Lenkern zusammengesetzt, nämlich einem am freien Ende der Lagerstrebe 11 an der Abstützplatte 5 angelenkten Hilfslenker 13 und einem wiederum daran angelenkten Zentrallenker 14, der auch gelenkig am Kreuzkopf 9 als Antriebselement angelenkt ist. Ferner ist ein Abtriebslenker 15 gelenkig an den Zentrallenker 14 und die bewegliche Aufspannplatte 6 angebunden. Die entsprechenden Gelenkachsen sind mit den Bezugsziffern 16 für das Gelenk Abstützplatte 5/Hilfslenker 13 bzw. Gelenkachse 17 für das Gelenk Hilfslenker 13/Zentrallenker 14 bzw. Gelenkachse 18 für das Gelenk Zentrallenker 14/Abtriebslenker 15 bzw. Gelenkachse 19 für das Gelenk Abtriebslenker 15/bewegliche Aufspannplatte 6 bzw. Gelenkachse 20 für das Gelenk Zentrallenker 14/Kreuzkopf 9 bezeichnet.

Wichtig für die Funktion der Schließeinheit 7 ist die Bewegung der Gelenkachse 18 zwischen Zentrallenker 14 und Abtriebslenker 15, die auf einer in den Fig. 1 bis 4 dargestellten, nicht-kreisförmigen Bewegungsbahn B läuft. Letztere ist dabei in drei Äste eingeteilt, nämlich einen in den Fig. 1 bis 4 kurz gestrichelt dargestellten Zustell-Ast BZ, der im Wesentlichen linear und schräg zur Zustellrichtung Z verläuft. Daran schließt sich ein strichpunktiert dargestellter Wendepunkt-Ast BW an, in dessen Verlauf ein Wendepunkt WP definiert ist. Die Krümmung zwischen dem Zustell-Ast BZ und dem Wendepunkt WP ist etwas schwächer, als die Krümmung zwischen dem Wendepunkt WP und dem dem Wendepunkt-Ast BW folgenden Prägeast BP, der in den Fig. 1 bis 4 lang gestrichelt dargestellt ist und im Wesentlichen parallel zur Zustellrichtung Z verläuft.

Die Lenkeranordnung 12 mit Hilfs-, Zentral- und Antriebslenker 13, 14, 15 ist im Zusammenspiel mit der Anbindung an den Kreuzkopf 9 so ausgelegt, dass in der in Fig. 2 dargestellten Zuhalteposition der beweglichen Aufspannplatte 6 die vier Gelenkachsen 16, 17, 18, 19 der Lenkeranordnung 12 auf einer Geraden G liegen, die senkrecht auf der Tangente T im Wendepunkt WP an der Bewegungsbahn B steht. Aufgrund dieser Auslegung der Lenkeranordnung 12 mit der entsprechenden Bewegungsbahn B wird im Bereich dieser Zuhalteposition die höchste Kraftübersetzung zwischen dem Kreuzkopf 9 und der beweglichen Aufspannplatte 6 erzielt. Gleichzeitig ist aufgrund der Anordnung der vier Gelenkachsen 16 bis 19 auf der Geraden G die Schließeinheit 7 in dieser Zuhalteposition selbstsperrend, so dass hohe Zuhaltekräfte auf das Werkzeug zwischen fester Aufspannplatte 2 und beweglicher Aufspannplatte 6 erzielt werden.

Aufgrund der Auslegung der Bewegungsbahn B mit dem Wendepunkt WP kann die Schließeinheit 7 aus der in Fig. 2 gezeigten Zuhalteposition einerseits zurückgefahren werden, indem der Kreuzkopf 9 wieder entgegen der Zustellrichtung Z bewegt und damit in Richtung der in Fig. 1 gezeigten Offenstellung der beweglichen Aufspannplatte 6 verschoben wird. Andrerseits wird durch eine entgegengesetzte Bewegung des Kreuzkopfes 9 in Zustellrichtung Z - anders als bei einer üblichen Kniehebelanordnung aus der Totpunktstellung heraus - die bewegliche Aufspannplatte 6 weiter in Zustellrichtung Z auf dem Prägeast BP verschoben. Hierbei wird aufgrund der Ausrichtung des Prägeastes BP eine geringe Wegübersetzung und hohe Prägekraft aus der Bewegung des Kreuzkopfes 9 auf die bewegliche Aufspannplatte 6 abgeleitet. Die gezeigte Schließeinheit 7 ist also gerade für das sogenannte Spritzprägen besonders geeignet.

Unterstützend für die Auslegung der Bewegungsbahn B sind konstruktive Maßnahmen im Bereich der Lenkeranordnung 12 vorgesehen, die im Folgenden kurz erläutert werden sollen. So ist der Hilfslenker 13 während der Bewegung der Schließeinheit 7 zwischen der Offenstellung gemäß Fig. 1 und der Zuhalteposition gemäß Fig. 2 im Wesentlichen entgegen der Zustellrichtung Z parallel hierzu gerichtet. Die Hauptübersetzung der Bewegung des Kreuzkopfes 9 auf die bewegliche Aufspannplatte 6 wird dabei durch das Schwenken des Zentrallenkers 14 um die Gelenkachse 7 bei einer geringen Ausweichbewegung des Hilfslenkers 13 und ein entsprechendes Strecken von Zentrallenker und Abtriebslenker 15 zueinander erzielt. In der Zuhalteposition gemäß Fig. 2 ist dann der Hilfslenker 13 kolinear auf der Geraden G mit dem Abtriebslenker 15 und dem Zentrallenker 14 bezüglich der Gelenkachsen 16 bis 19 angeordnet, weist allerdings ausgehend von der Gelenkachse 16 entgegen der Zustellrichtung Z. Der Hilfslenker 13 weist dabei eine Länge auf, die maximal der Hälfte der Länge von Zentrallenker 14 und Abtriebslenker 15 entspricht. Hilfslenker 13 und Zentrallenker 14 überlappen sich dabei teilweise.

Bezüglich der Gelenkachse 19 zwischen Abtriebslenker 15 und beweglicher Aufspannplatte 6 ist festzuhalten, dass sich diese in der Zuhalteposition gemäß Fig. 2 im Krümmungsmittelpunkt der Bewegungsbahn B befindet. Dies fördert die Güte der Kraftübersetzung zwischen dem Kreuzkopf 9 über die Lenkeranordnungen 12 auf die bewegliche Aufspannplatte 6.

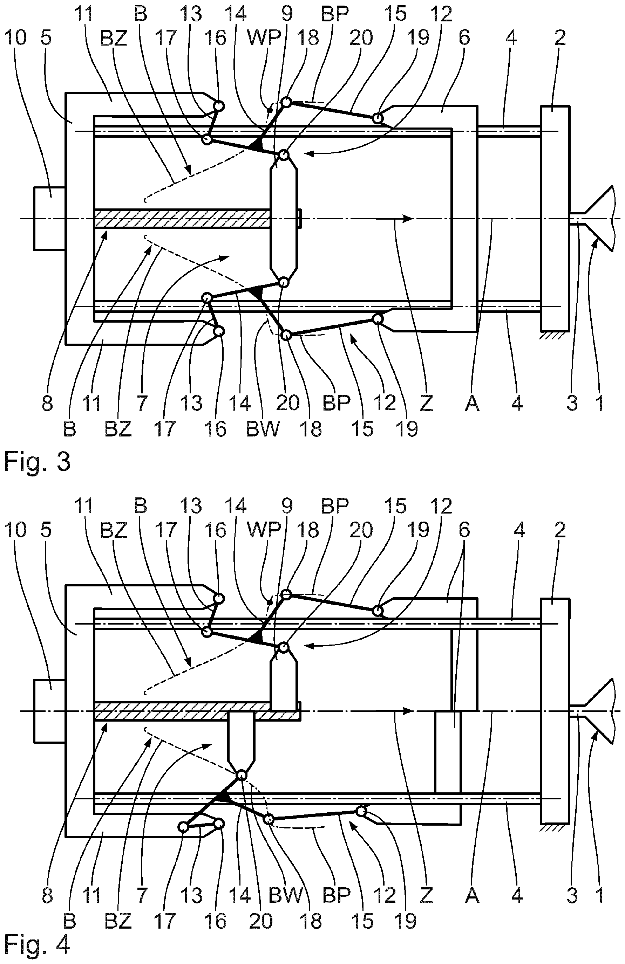

Zusammenfassend zeichnet sich die Schließeinheit 7 gegenüber den bekannten Kniehebel-Ausführungen dadurch aus, dass das Werkzeug in der Zuhalteposition in einer Zwischenstellung der Lenkeranordnung 12 zugehalten wird. Folglich ist es möglich, durch eine Weiterbewegung des Kreuzkopfes 9 in Zustellrichtung Z die bewegliche Aufspannplatte 6 aus dieser Zuhalteposition für das geschlossene Werkzeug gemäß Fig. 2, in der der Mechanismus selbstsperrend ist, weiter auf die feste Aufspannplatte 2 zu zu bewegen, wie dies in Fig. 3 dargestellt und aus der Fig. 4 besonders augenfällig wird. Dort ist unten die Anordnung in der Zuhalteposition und oben die Anordnung in weiter zugefahrener Prägeposition gezeigt. Dabei läuft die Gelenkachse 18 auf der Bewegungsbahn B jenseits des Wendepunktes WP in den Prägeast BP hinein, wobei insbesondere zu Beginn der Weiterbewegung aus dem Wendepunkt WP heraus immer noch eine sehr hohe Kraftübersetzung vorliegt.

Soll die vorstehend beschriebene Prägefunktion nicht durchgeführt werden, so wird - wie oben bereits angedeutet - der Kreuzkopf 9 zurückgeführt und die Lenkeranordnung 12 bewegt sich aus der in Fig. 2 gezeigten Zuhalteposition in Richtung der in Fig. 1 gezeigten Offenstellung. Damit lässt sich auch ein üblicher Spritzgießvorgang mit der Schließeinheit 7 durchführen. Insoweit ist die Konstruktion universell einsetzbar.

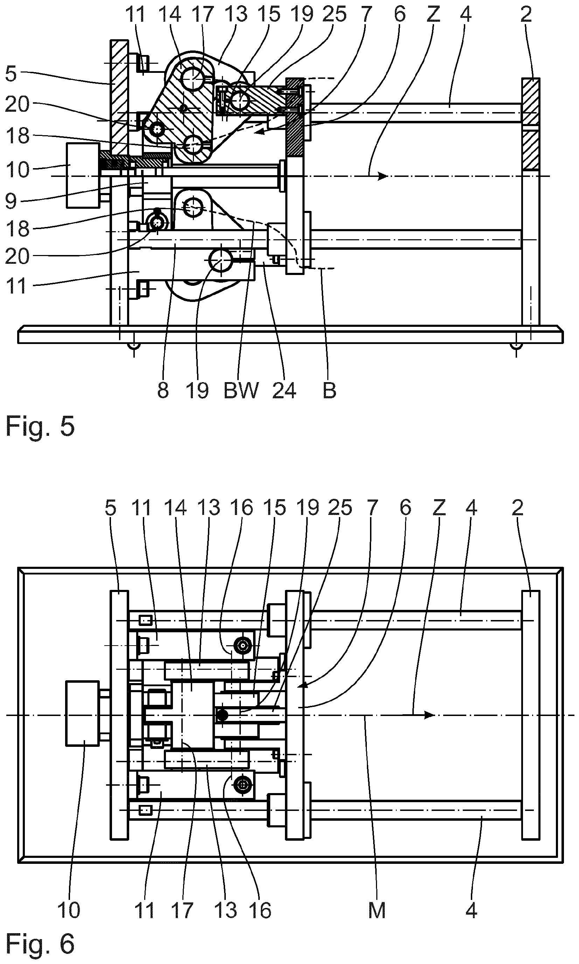

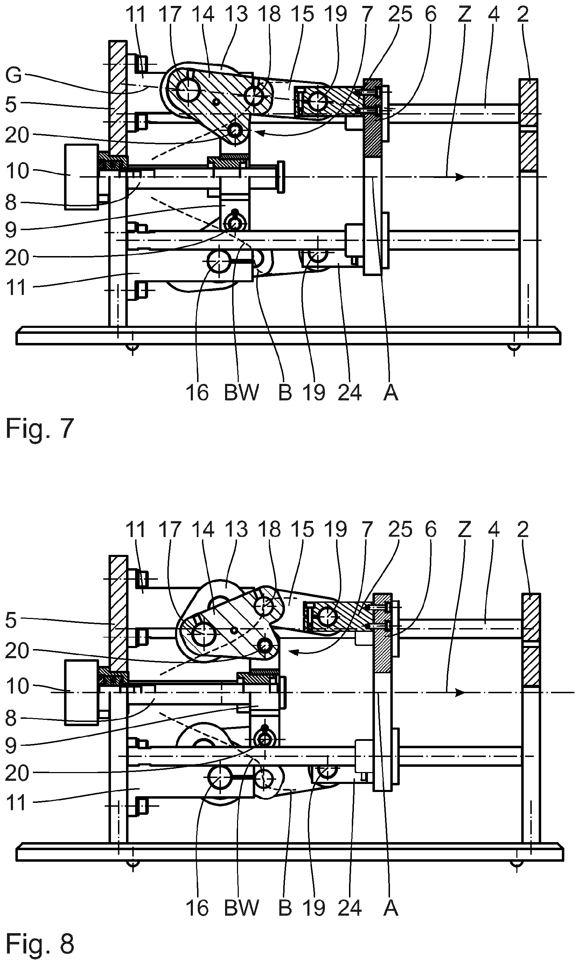

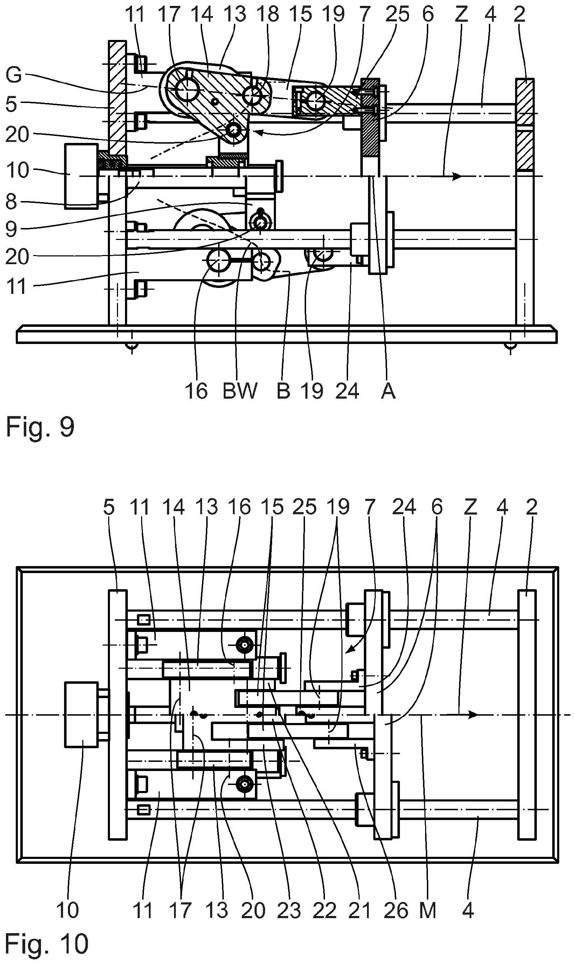

In den Fig. 5 bis 10 ist eine konstruktive Ausführung der in den Fig. 1 bis 4 schematisch dargestellten Schließeinheit 7 gezeigt. Übereinstimmende Bauteile sind dabei mit identischen Bezugszeichen versehen und müssen nicht nochmals eigens aufgeführt werden. Es ist lediglich insbesondere unter Bezugnahme auf die Fig. 6 und 10 hervorzuheben, dass die oberen und unteren Lenkeranordnungen 12 jeweils zur vertikalen Mittenebene M paarig vorhandene Lagerstreben 11 mit daran angelenkten paarigen Hilfslenkern 13 und einem gemeinsamen massiven Zentrallenker 14 aufweisen. An diesem sind mittig und beiderseits außen davor Lagerfortsätze 21, 22, 23 (Fig. 10) angeformt, zwischen denen die wiederum paarig angelegten Abtriebslenker 15 unter Ausbildung der Gelenkachse 18 angekoppelt sind. Die Gelenkachse 19 zwischen diesen paarigen Abtriebslenkern 15 und der beweglichen Aufspannplatte 6 ist wiederum durch drei dort angesetzte Lageransätze 24, 25, 26 (Fig. 10) gebildet, zwischen denen jeweils die paarigen Abtriebslenker 15 drehbar gelagert sind.

## Patentansprüche

1. Spritzgießmaschine, umfassend
- eine bewegliche Form-Aufspannplatte (6),
- eine feste Form-Aufspannplatte (2),
- eine feste Abstützplatte (5), und
- eine Schließeinheit (7) mit
= einem vorzugsweise parallel zur Zustellrichtung (Z) der beweglichen Aufspannplatte (6) angetriebenen Antriebselement (9) zur Einleitung einer Betätigungskraft in die Schließeinheit (7), sowie
= einer gelenkig mit dem Antriebselement (9) verbundenen Lenkeranordnung (12) zwischen der Abstützplatte (5) und der beweglichen Aufspannplatte (6) zur Übertragung der Bewegung des Antriebselements (9) auf die bewegliche Aufspannplatte (6) im Sinne einer Zustellbewegung der beweglichen Aufspannplatte (6) relativ zur festen Aufspannplatte (2),sowie
- eine Ausbildung der Lenkeranordnung (12) mit drei gelenkig gekoppelten Lenkern (13, 14, 15), umfassend
= einen an der Abstützplatte (5) angelenkten Hilfslenker (13),
= einen daran angelenkten Zentrallenker (14), der mit dem Antriebselement (9) gekoppelt ist, und
= einen Abtriebslenker (15) zwischen dem Zentrallenker (14) und der beweglichen Aufspannplatte (6),
**gekennzeichnet durch** eine derartige Kopplung der Lenker (13, 14, 15)
= dass die Gelenkachse (18) zwischen Zentral- (14) und Abtriebslenker (15) auf einer nicht-kreisförmigen Bewegungsbahn (B) läuft, und
= dass in einer Zuhalteposition der beweglichen Aufspannplatte (6) die vier jeweils zwischen Abstützplatte (5), den Lenkern (13, 14, 15) und der beweglichen Aufspannplatte (6) gebildeten Gelenkachsen (16, 17, 18, 19) der Lenkeranordnung (12) auf einer Geraden (G) liegen, die senkrecht auf einer Wendepunkt-Tangente (T) an der Bewegungsbahn (B) der Gelenkachse (18) zwischen Zentral- (14) und Abtriebslenker (15) steht.

2. Spritzgießmaschine nach Anspruch 1, **dadurch gekennzeichnet, dass** die Bewegungsbahn (B) in Zustellrichtung (Z) einen im Wesentlichen linearen, schräg zur Zustellrichtung (Z) verlaufenden Zustell-Ast (BZ), einen sich daran anschließenden Wendepunkt-Ast (BW) mit dem Wendepunkt (WP) der Bewegungsbahn (B) und einen sich wiederum daran anschließenden, weiter in Zustellrichtung (Z) verlaufenden Präge-Ast (BP) aufweist.

3. Spritzgießmaschine nach Anspruch 2, **dadurch gekennzeichnet, dass** der Zustell-Ast (BZ) im Vergleich zum Präge-Ast (BP) derart ausgelegt ist, dass das Übersetzungsverhältnis zwischen der Bewegung des Antriebselementes (9) und der beweglichen Aufspannplatte (6) im Zustell-Ast (BZ) höher als im Präge-Ast (BP) ist.

4. Spritzgießmaschine nach einem der vorgenannten Ansprüche, **dadurch gekennzeichnet, dass** in der Zuhalteposition der Hilfslenker (13) in eine von der beweglichen Aufspannplatte (6) derart weg weisenden Richtung ausgerichtet ist, dass sich Hilfslenker (13) und Zentrallenker (14) in der Zuhalteposition zumindest teilweise überlagern.

5. Spritzgießmaschine nach einem der vorgenannten Ansprüche, **dadurch gekennzeichnet, dass** die Länge des Hilfslenkers (13) maximal der Hälfte der Länge von Zentral- (14) oder Abtriebslenker (15) entspricht.

6. Spritzgießmaschine nach einem der vorgenannten Ansprüche, **dadurch gekennzeichnet, dass** sich die Gelenkachse (19) zwischen Abtriebslenker (15) und beweglicher Aufspannplatte (6) in der Zuhalteposition im Krümmungsmittelpunkt der Bewegungsbahn (B) befindet.

7. Spritzgießmaschine nach einem der vorgenannten Ansprüche, **dadurch gekennzeichnet, dass** mindestens zwei einander entsprechende Lenkeranordnungen (12) spiegelsymmetrisch zur Antriebsachsenebene (A) des Antriebselementes (9) vorgesehen sind.

8. Spritzgießmaschine nach einem der vorgenannten Ansprüche, **dadurch gekennzeichnet, dass** die Zustellrichtung (Z) der beweglichen Aufspannplatte (6) horizontal oder vertikal ausgerichtet ist.

9. Spritzgießmaschine nach einem der vorgenannten Ansprüche, **dadurch gekennzeichnet, dass** das Antriebselement durch einen pneumatischen oder hydraulischen Kolben-Zylinder-Antrieb, einen Kreuzkopf (9) mit Spindeltrieb (8), einen Zahnstangenantrieb oder einen Linearmotor angetrieben ist.

## Claims

1. Injection moulding machine comprising:
- a movable moulding platen (6),
- a fixed moulding platen (2),
- a fixed support plate (5), and
- a clamping unit (7) having
= a drive element (9) which is preferably driven parallel with the infeed direction (Z) of the movable platen (6) in order to introduce an actuating force into the clamping unit (7), and
= a linkage assembly (12) between the support plate (5) and the movable platen (6), which, for transmitting the movement of the drive element (9) to the movable platen (6) in the context of an infeed movement of the movable platen (6) relative to the fixed platen (2), is connected in an articulated manner to the drive element (9),
and
- a configuration of the linkage assembly (12) having three control arms (13, 14, 15) intercoupled in an articulated manner, comprising
= an auxiliary control arm (13) which is articulated on the support plate (5),
= a central control arm (14) which is articulated on said auxiliary control arm (13) and is coupled to the drive element (9), and
= an output control arm (15) interdisposed between the central control arm (14) and the movable platen (6),
**characterized by** a coupling of the control arms (13, 14, 15) such
= that the articulation axis (18) between the central control arm (14) and the output control arm (15) runs on a non-circular motion path (B), and
= that in a closing position of the movable platen (6) the four articulation axes (16, 17, 18, 19) of the linkage assembly (12) which are in each case formed between the support plate (5), the control arms (13, 14, 15), and the movable platen (6) lie on a straight line (G) which is perpendicular on a reversal point tangent (T) on the motion path (B) of the articulation axis (18) between the central control arm (14) and the output control arm (15).

2. Injection moulding machine according to Claim 1, **characterized in that** the motion path (B) in the infeed direction (Z) has an infeed branch (BZ) which is substantially linear and running obliquely related to the infeed direction (Z), a reversal point branch (BW) continuing to the infeed branch (BZ) and including the reversal point (WP) of the motion path (b), and, adjoining in turn thereto, an embossing branch (BP) which runs further in the infeed direction (Z).

3. Injection moulding machine according to Claim 2, **characterized in that** the infeed branch (BZ) as compared with the embossing branch (BP) is conceived in such a manner that the gearing ratio between the movement of the drive element (9) and the movable platen (6) is higher in the infeed branch (BZ) than in the embossing branch (BP).

4. Injection moulding machine according to one of the preceding claims, **characterized in that** in the closing position the auxiliary control arm (13) is oriented in a direction which points away from the movable platen (6) in such a manner that the auxiliary control arm (13) and the central control arm (14) in the closing position are at least partially superimposed.

5. Injection moulding machine according to one of the preceding claims, **characterized in that** the length of the auxiliary control arm (13) at maximum corresponds to half the length of the central control arm (14) or of the output control arm (15).

6. Injection moulding machine according to one of the preceding claims, **characterized in that** the articulation axis (19) between the output control arm (15) and the movable platen (6) in the closing position is located in the centre of curvature of the motion path (B).

7. Injection moulding machine according to one of the preceding claims, **characterized in that** at least two mutually corresponding linkage assemblies (12) are provided so as to be mirror-symmetrical in relation to the drive axis plane (A) of the drive element (9).

8. Injection moulding machine according to one of the preceding claims, **characterized in that** the infeed direction (Z) of the movable platen (6) is horizontally or vertically oriented.

9. Injection moulding machine according to one of the preceding claims, **characterized in that** the drive element is driven by a pneumatic or hydraulic piston-and-cylinder drive, a cross head (9) having a spindle drive (8), a rack-and-pinion drive, or a linear motor.

## Revendications

1. Machine de moulage par injection, comprenant :
- un plateau porte-outillage mobile (6),
- un plateau porte-outillage fixe (2),
- une plaque d'appui fixe (5) et
- une unité de fermeture (7) comprenant :
= un élément d'entraînement (9) entraîné de préférence parallèlement à la direction d'avancement (Z) du plateau porte-outillage mobile (6) pour appliquer une force de commande dans l'unité de fermeture (7),
= une tringlerie (12) articulée sur l'élément d'entraînement (9) entre la plaque d'appui (5) et le plateau porte-outillage mobile (6) pour transférer le mouvement de l'élément d'entraînement (9) sur le plateau porte-outillage mobile (6) par rapport au plateau porte-outillage fixe (2), ainsi que :
- une configuration de la tringlerie (12) avec trois bras oscillants (13, 14, 15) couplés par articulation, comprenant :
= un bras oscillant auxiliaire (13) articulé sur la plaque d'appui (5),
= un bras oscillant central (14) qui y est articulé et qui est couplé à l'élément d'entraînement (9) et
= un bras oscillant mené (15) entre le bras oscillant central (14) et le plateau porte-outillage mobile (6),
**caractérisé par** un couplage des bras oscillants (13, 14, 15) en sorte que :
= l'axe d'articulation (18) s'étende entre le bras oscillant central (14) et le bras oscillant mené (15) sur un trajet de déplacement non circulaire (B) et
= dans une position de verrouillage du plateau porte-outillage mobile (6), les quatre axes
d'articulation (16, 17, 18, 19) de la tringlerie (12) formés respectivement entre la plaque d'appui (5), les bras oscillants (13, 14, 15) et le plateau porte-outillage mobile (6) se trouvent sur une droite (G) qui est perpendiculaire à une tangente au point d'inflexion (T) sur le trajet de déplacement (B) de l'axe d'articulation (18) entre le bras oscillant central (14) et le bras oscillant mené (15).

2. Machine de moulage par injection selon la revendication 1, **caractérisée en ce que** le trajet de déplacement (B) présente dans le sens d'avancement (Z) une branche d'avancement (BZ) sensiblement linéaire et s'étendant en oblique par rapport à la direction d'avancement (Z), une branche de point de retour (BW) qui s'y raccorde avec le point de retour (WP) du trajet de déplacement (B) et une branche de gaufrage (BP) qui s'y raccorde à nouveau et s'étend en outre dans la direction d'avancement (Z).

3. Machine de moulage par injection selon la revendication 2, **caractérisée en ce que** la branche d'avancement (BZ) est disposée en comparaison de la branche de gaufrage (BP) en sorte que le rapport de transmission entre le déplacement de l'élément d'entraînement (9) et le plateau porte-outillage mobile (6) dans la branche d'avancement (BZ) soit supérieur à celui de la branche de gaufrage (BP).

4. Machine de moulage par injection selon l'une quelconque des revendications précédentes, **caractérisée en ce que,** dans la position de verrouillage, le bras oscillant auxiliaire (13) est dirigé dans une direction s'écartant du plateau porte-outillage mobile (6) de sorte que le bras oscillant auxiliaire (13) et le bras oscillant central (14) se chevauchent au moins en partie dans la position de verrouillage.

5. Machine de moulage par injection selon l'une quelconque des revendications précédentes, **caractérisée en ce que** la longueur du bras oscillant auxiliaire (13) correspond au maximum à la moitié de la longueur du bras oscillant central (14) ou du bras oscillant mené (15).

6. Machine de moulage par injection selon l'une quelconque des revendications précédentes, **caractérisée en ce que** l'axe d'articulation (19) entre le bras oscillant mené (15) et le plateau porte-outillage mobile (6) dans la position de verrouillage se trouve au point central de la courbure du trajet de déplacement (B).

7. Machine de moulage par injection selon l'une quelconque des revendications précédentes, **caractérisée en ce qu**'il est prévu au moins deux tringleries (12) se correspondant l'une l'autre en symétrie de miroir par rapport au plan d'axe d'entraînement (A) de l'élément d'entraînement (9).

8. Machine de moulage par injection selon l'une quelconque des revendications précédentes, **caractérisée en ce que** la direction d'avancement (Z) du plateau porte-outillage mobile (6) est dirigé horizontalement ou verticalement.

9. Machine de moulage par injection selon l'une quelconque des revendications précédentes, **caractérisée en ce que** l'élément d'entraînement est entraîné par une commande à piston-cylindre pneumatique ou hydraulique, une tête de piston (9) avec une commande de broches (8), un entraînement à crémaillère ou un moteur linéaire.
